# EUROPÄISCHE PATENTANMELDUNG

(11) **EP 3 029 046 A1**
(43) Veröffentlichungstag der Anmeldung: **08.06.2016**
(21) Anmeldenummer: 14196183.9
(22) Anmeldetag: 04.12.2014
(51) Int. Cl.: C07F 9/6574

(54) **Eintopfsynthese zur Herstellung von Diphosphiten und Triphosphiten**

(60) Teilanmeldung: 15192748.0
(71) Anmelder: Evonik Degussa GmbH, 45128 Essen (DE)
(72) Erfinder: Dyballa, Katrin Marie, 45657 Recklinghausen (DE); Franke, Robert, 45772 Marl (DE); Börner, Armin, 18059 Rostock (DE); Selent, Detlef, 18059 Rostock (DE)

(57) **Zusammenfassung**

Eintopfsynthese zur Herstellung von Diphosphiten und Triphosphiten.
Die Triphosphite haben die unten angegebene Struktur und werden direkt aus Anthracentriol erhalten durch Umsetzung mit PCl3 und 2,2'-Biphenol. 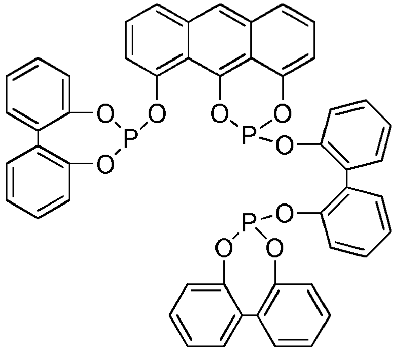 Ebenfalls beansprucht werden einstufige Synthesen zu Diphosphiten durch direkte Umsetzung von 2,2'-Diphenolen mit PCl3.

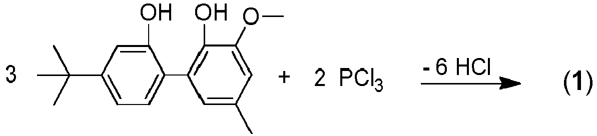

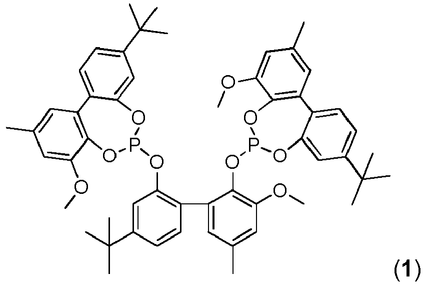

## Beschreibung

Die Erfindung betrifft eine Eintopfsynthese zur Herstellung von Diphosphiten und Triphosphiten.

Die Synthese von phosphorhaltigen Liganden ist in der Literatur mehrfach beschrieben. Einen guten Überblick findet man in "Phosphorous(III) Ligands in Homogeneous Catalysis - Design and Synthesis" von Paul C.J. Kamer und Piet W.N.M. van Leeuwen; John Wiley and Sons, 2012 sowie darin enthaltene Literaturhinweise.

In DE 102011085883 A1 wird eine Synthese von Anthracentriol-Liganden beschrieben. Es wird ein sequentieller Weg genutzt, um die zur Verfügung stehenden drei Hydroxygruppen des Anthracentriols zu phosphorylieren. Dabei wird zunächst das Hydroxydiphosphit A durch Veresterung und Umlagerung gebildet, und dann mit einem weiteren Äquivalent eines Phosphorigsäurediesterchlorids zum Triphosphit umgesetzt.

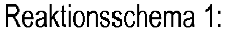

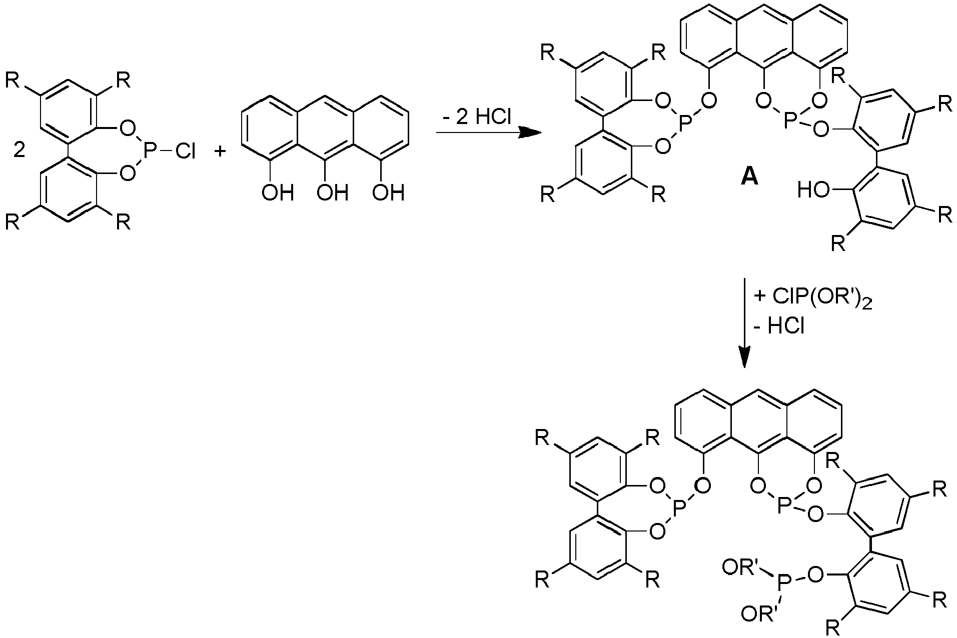

In der Regel erfolgt die Synthese der Liganden über mehrere Zwischenstufen, die zwischen den einzelnen Stufen isoliert werden. Es ist daher wünschenswert, ein Verfahren zu entwickeln, dass auf die Isolierung dieser Zwischenstufen verzichten kann und dennoch Liganden in guter Ausbeute generiert.

Der Erfindung lag die Aufgabe zugrunde ein Verfahren zur Herstellung von Diphosphiten und Triphosphiten zu entwickeln, welches mit möglichst wenigen Verfahrensschritten zu den gewünschten Zielprodukten führt.

Die Aufgabe wird gelöst durch ein Verfahren nach Anspruch 1 oder 9.

Verfahren umfassend den Verfahrensschritt:
a) 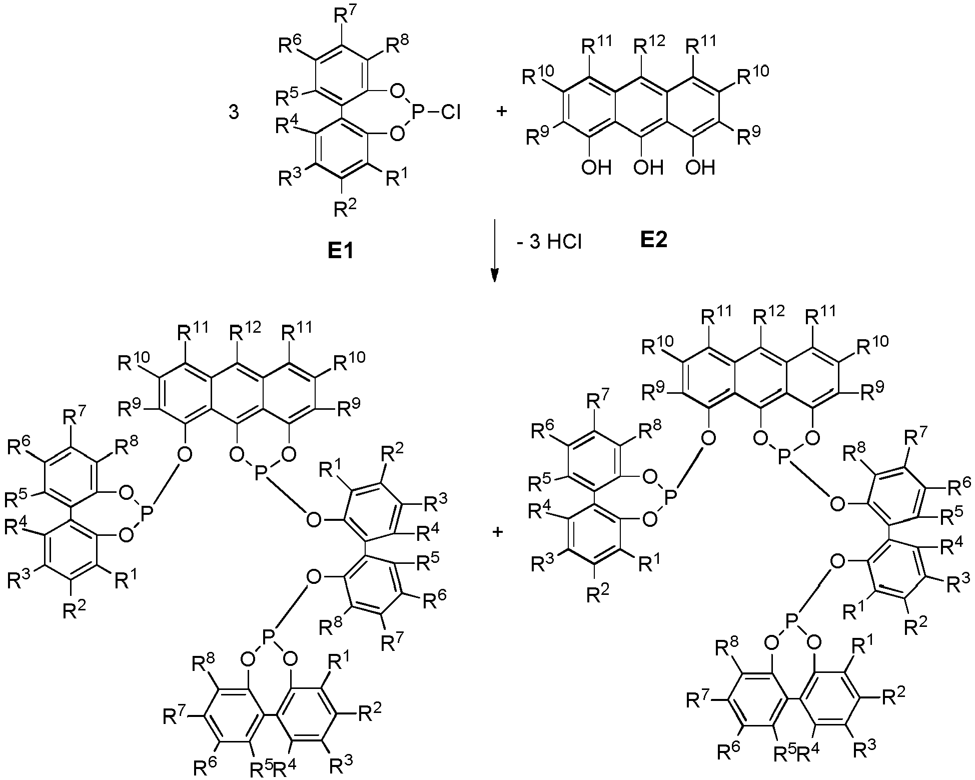 wobei die bei der Umsetzung anfallenden Zwischenstufen (Z1) und (Z2) nicht isoliert werden: 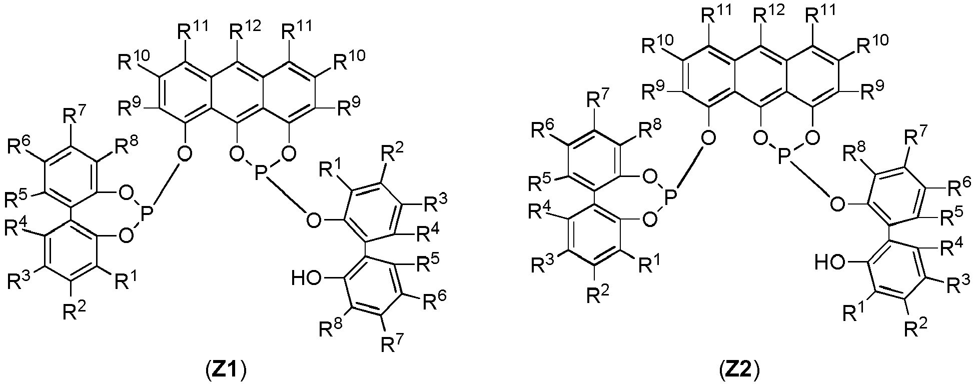
wobei
R¹, R², R³, R⁴, R⁵, R⁶, R⁷, R⁸ ausgewählt sind aus:
   -H, -(C₁-C₁₂)-Alkyl, -O-(C₁-C₁₂)-Alkyl, -O-(C₆-C₂₀)-Aryl, -(C₆-C₂₀)-Aryl, -S-Alkyl, -S-Aryl, Halogen, -COO-(C₁-C₁₂)-Alkyl, -CONH-(C₁-C₁₂)-Alkyl, -CO-(C₁-C₁₂)-Alkyl, -CO-(C₆-C₂₀)-Aryl, -COOH, -OH, -SO₃H, -CN, -N[(C₁-C₁₂)-Alkyl]₂;
R⁹, R¹⁰, R¹¹, R¹² ausgewählt sind aus:
   -H, -(C₁-C₁₂)-Alkyl, -O-(C₁-C₁₂)-Alkyl, -O-(C₆-C₂₀)-Aryl, -(C₆-C₂₀)-Aryl, -S-Alkyl, -S-Aryl, Halogen, -COO-(C₁-C₁₂)-Alkyl, -CONH-(C₁-C₁₂)-Alkyl, -CO-(C₁-C₁₂)-Alkyl, -CO-(C₆-C₂₀)-Aryl, -COOH, -OH, -SO₃H, -N[(C₁-C₁₂)-Alkyl]₂;
   wobei die genannten Alkyl- und Arylgruppen substituiert sein können.

-(C₁-C₁₂)-Alkyl und -O-(C₁-C₁₂)-Alkyl können jeweils unsubstituiert oder durch einen oder mehrere gleiche oder verschiedene Reste substituiert sein, die ausgewählt sind unter -(C₃-C₁₂)-Cycloalkyl, -(C₃-C₁₂)-Heterocycloalkyl, -(C₆-C₂₀)-Aryl, Fluor, Chlor, Cyano, Formyl, Acyl oder Alkoxycarbonyl.

-(C₆-C₂₀)-Aryl und -(C₆-C₂₀)-Aryl-(C₆-C₂₀)-Aryl- können jeweils unsubstituiert oder durch einen oder mehrere gleiche oder verschiedene Reste substituiert sein, die ausgewählt sind unter -H, -(C₁-C₁₂)-Alkyl, -O-(C₁-C₁₂)-Alkyl, -O-(C₆-C₂₀)-Aryl, -(C₆-C₂₀)-Aryl, -Halogen (wie Cl, F, Br, I), -COO-(C₁-C₁₂)-Alkyl, -CONH-(C₁-C₁₂)-Alkyl, -(C₆-C₂₀)-Aryl-CON[(C₁-C₁₂)-Alkyl]₂, -CO-(C₁-C₁₂)-Alkyl, -CO-(C₆-C₂₀)-Aryl, -COOH, -OH, -SO₃H; -SO₃Na, -NO₂, -CN, -N[(C₁-C₁₂)-Alkyl]₂.

Im Rahmen der Erfindung umfasst der Ausdruck -(C₁-C₁₂)-Alkyl geradkettige und verzweigte Alkylgruppen. Vorzugsweise handelt es sich dabei um unsubstituierte geradkettige oder verzweigte -(C₁-C₈)-Alkyl- und ganz bevorzugt -(C₁-C₆)-Alkylgruppen. Beispiele für -(C₁-C₁₂)-Alkylgruppen sind insbesondere Methyl, Ethyl, Propyl, Isopropyl, n-Butyl, iso-Butyl, sec.-Butyl, tert.-Butyl, n-Pentyl, 2-Pentyl, 2-Methylbutyl-, 3-Methylbutyl-, 1,2-Dimethylpropyl-, 1,1-Dimethylpropyl, 2,2-Dimethylpropyl-, 1-Ethylpropyl-, n-Hexyl-, 2-Hexyl-, 2-Methylpentyl-, 3-Methylpentyl-, 4-Methylpentyl-, 1,1-Dimethylbutyl-, 1,2-Diemthylbutyl-, 2,2-Dimethylbutyl-, 1,3-Dimethylbutyl-, 2,3-Dimethylbutyl-, 3,3-Dimethylbutyl-, 1,1,2-Trimethylpropyl-, 1,2,2-Trimethylpropyl-, 1-Ethylbutyl-, 1-Ethyl-2-methylpropyl-, n-Heptyl-, 2-Heptyl-, 3-Heptyl-, 2-Ethylpentyl-, 1-Propylbutyl-, n-Octyl-, 2-Ethylhexyl-, 2-Propylheptyl-, Nonyl-, Decyl.

Die Erläuterungen zum Ausdruck -(C₁-C₁₂)-Alkyl gelten auch für die Alkylgruppen in -O-(C₁-C₁₂)-Alkyl, also in -(C₁-C₁₂)-Alkoxy. Vorzugsweise handelt es sich dabei um unsubstituierte geradkettige oder verzweigte -(C₁-C₆)-Alkoxygruppen.

Substituierte -(C₁-C₁₂)-Alkylgruppen und substituierte -(C₁-C₁₂)-Alkoxygruppen können in Abhängigkeit von ihrer Kettenlänge, einen oder mehrere Substituenten aufweisen. Die Substituenten sind vorzugsweise unabhängig voneinander ausgewählt unter -(C₃-C₁₂)-Cycloalkyl, -(C₃-C₁₂)-Heterocycloalkyl, -(C₆-C₂₀)-Aryl, Fluor, Chlor, Cyano, Formyl, Acyl oder Alkoxycarbonyl.

Der Ausdruck -(C₃-C₁₂)-Cycloalkyl umfasst im Sinne der vorliegenden Erfindung mono-, bi- oder tricyclische Kohlenwasserstoffreste mit 3 bis 12, insbesondere 5 bis 12 Kohlenstoffatomen. Dazu zählen Cyclopropyl-, Cyclobutyl-, Cyclopentyl-, Cyclohexyl-, Cycloheptyl-, Cyclooctyl-, Cyclododecyl-, Cyclopentadecyl-, Norbonyl- oder Adamantyl.
Ein Beispiel für ein substituiertes Cycloalkyl wäre Menthyl.

Der Ausdruck -(C₃-C₁₂)-Heterocycloalkylgruppen umfasst im Sinne der vorliegenden Erfindung nichtaromatische, gesättigte oder teilweise ungesättigte cycloaliphatische Gruppen mit 3 bis 12, insbesondere 5 bis 12, Kohlenstoffatomen. Die -(C₃-C₁₂)-Heterocycloalkylgruppen weisen vorzugsweise 3 bis 8, besonders bevorzugt 5 oder 6, Ringatome auf. In den Heterocycloalkylgruppen sind im Unterschied zu den Cycloalkylgruppen 1, 2, 3 oder 4 der Ringkohlenstoffatome durch Heteroatome oder heteroatomhaltige Gruppen ersetzt. Die Heteroatome oder die heteroatomhaltige Gruppen sind vorzugsweise ausgewählt unter -O-, -S-, -N-, -N(=O)-, -C(=O)- oder -S(=O)-. Beispiele für -(C₃-C₁₂)-Heterocycloalkylgruppen Tetrahydrothiophenyl, Tetrhydrofuryl, Tetrahydropyranyl und Dioxanyl.

Der Ausdruck -(C₆-C₂₀)-Aryl und -(C₆-C₂₀)-Aryl-(C₆-C₂₀)-Aryl- umfasst im Sinne der vorliegenden Erfindung mono- oder polycyclische aromatische Kohlenwasserstoffreste. Diese weisen 6 bis 20 Ringatome, besonders bevorzugt 6 bis 14 Ringatome, insbesondere 6 bis 10 Ringatome, auf. Aryl steht vorzugsweise für -(C₆-C₁₀)-Aryl und -(C₆-C₁₀)-Aryl-(C₆-C₁₀)-Aryl-. Aryl steht insbesondere für Phenyl, Naphthyl, Indenyl, Fluorenyl, Anthracenyl, Phenanthrenyl, Naphthacenyl, Chrysenyl, Pyrenyl, Coronenyl. Insbesondere steht Aryl für Phenyl, Naphthyl und Antracenyl.

Substituierte -(C₆-C₂₀)-Arylgruppen und -(C₆-C₂₀)-Aryl-(C₆-C₂₀)-Arylgruppen können, in Abhängigkeit von der Ringgröße, einen oder mehrere (z.B. 1, 2, 3, 4 oder 5) Substituenten aufweisen. Diese Substituenten sind vorzugsweise unabhängig voneinander ausgewählt unter - H, -(C₁-C₁₂)-Alkyl, -O-(C₁-C₁₂)-Alkyl, -O-(C₆-C₂₀)-Aryl, -(C₆-C₂₀)-Aryl, -Halogen (wie Cl, F, Br, I),-COO-(C₁-C₁₂)-Alkyl, -CONH-(C₁-C₁₂)-Alkyl, -(C₆-C₂₀)-Aryl-CON[(C₁-C₁₂)-Alkyl]₂, -CO-(C₁-C₁₂)-Alkyl, -CO-(C₆-C₂₀)-Aryl, -COOH, -OH, -SO₃H; -SO₃Na, -NO₂, -CN, -N[(C₁-C₁₂)-Alkyl]₂-Substituierte -(C₆-C₂₀)-Arylgruppen und -(C₆-C₂₀)-Aryl-(C₆-C₂₀)-Arylgruppen sind vorzugsweise substituierte -(C₆-C₁₀)-Arylgruppen und -(C₆-C₁₀)-Aryl-(C₆-C₁₀)-Arylgruppen, insbesondere substituiertes Phenyl oder substituiertes Naphthyl oder substituiertes Anthracenyl. Substituierte -(C₆-C₂₀)-Arylgruppen tragen vorzugsweise eine oder mehrere z.B. 1, 2, 3, 4 oder 5 Substituenten, ausgewählt unter -(C₁-C₁₂)-Alkylgruppen, -(C₁-C₁₂)-Alkoxygruppen.

Der Ausdruck Halogene umfasst Cl, F, Br, I, vorzugsweise Cl, Br, I.

In einer Variante des Verfahrens sind R¹, R², R³, R⁴, R⁵, R⁶, R⁷, R⁸ ausgewählt aus:
-H, -(C₁-C₁₂)-Alkyl, -O-(C₁-C₁₂)-Alkyl, -O-(C₆-C₂₀)-Aryl, -S-Alkyl, -S-Aryl, Halogen.

In Variante des Verfahrens sind R¹, R², R³, R⁴, R⁵, R⁶, R⁷, R⁸ ausgewählt aus:
-H, -(C₁-C₁₂)-Alkyl, -O-(C₁-C₁₂)-Alkyl, -O-(C₆-C₂₀)-Aryl.

In Variante des Verfahrens sind R¹, R², R³, R⁴, R⁵, R⁶, R⁷, R⁸ ausgewählt aus:
-H, -(C₁-C₁₂)-Alkyl, -O-(C₁-C₁₂)-Alkyl.

In Variante des Verfahrens sind R¹, R², R³, R⁴, R⁵, R⁶, R⁷, R⁸ ausgewählt aus:
-(C₁-C₁₂)-Alkyl, -O-(C₁-C₁₂)-Alkyl.

In einer Variante des Verfahrens sind R⁹, R¹⁰, R¹¹, R¹² ausgewählt aus:
-H, -(C₁-C₁₂)-Alkyl, -O-(C₁-C₁₂)-Alkyl, -O-(C₆-C₂₀)-Aryl, -S-Alkyl, -S-Aryl, Halogen.

In einer Variante des Verfahrens sind R⁹, R¹⁰, R¹¹, R¹² ausgewählt aus:
-H, -(C₁-C₁₂)-Alkyl, -O-(C₁-C₁₂)-Alkyl, -O-(C₆-C₂₀)-Aryl.

In einer Variante des Verfahrens sind R⁹, R¹⁰, R¹¹, R¹² ausgewählt aus:
-H, -(C₁-C₁₂)-Alkyl, -O-(C₁-C₁₂)-Alkyl.

In einer Variante des Verfahrens sind R⁹, R¹⁰, R¹¹, R¹² ausgewählt aus:
-H, -(C₁-C₁₂)-Alkyl.

In einer Variante des Verfahrens sind R⁹, R¹⁰, R¹¹, R¹² ausgewählt aus:
-(C₁-C₁₂)-Alkyl, -O-(C₁-C₁₂)-Alkyl.

In einer Variante des Verfahrens erfolgt die Umsetzung im Verfahrensschritt a) unter Zusatz einer Base.

In einer Variante des Verfahrens erfolgt die Umsetzung im Verfahrensschritt a) unter Zusatz einer Base, welche ausgewählt ist aus: Aminen und Pyridinderivaten.

Vorzugsweise ist die Base ausgewählt aus: Triethylamin, Dimethylaminobutan, Di-isopropylethylamin, Dimethylaminopyridin, N-Methylpyrrolidon, Pyridin.

Besonders bevorzugt ist die Base ausgewählt aus: Triethylamin, Dimethylaminopyridin, Pyridin.

In einer Variante des Verfahrens wird das Edukt **(E2)** vorgelegt, und das Edukt **(E1)** hinzugetropft.

In einer Variante des Verfahrens wird das Edukt **(E2)** vor dem Hinzutropfen des Eduktes **(E1)** auf eine Temperatur im Bereich von -5 °C bis 5 °C heruntergekühlt.

In einer Variante des Verfahrens stehen die beiden Reste mindestens eines der vier folgenden Restepaare nicht für den gleichen Rest: R¹ und R⁸, R² und R⁷, R³ und R⁶, R⁴ und R⁵.

Durch das Merkmal, dass "die beiden Reste mindestens eines der vier folgenden Restepaare nicht für den gleichen Rest stehen: R¹ und R⁸, R² und R⁷, R³ und R⁶, R⁴ und R⁵ " wird zum Ausdruck gebracht, dass es sich um ein unsymmetrisches Biphenol handelt. Bei unsymmetrischen Biphenolen lassen sich die beiden Aromaten nicht durch eine zwischen ihnen liegende Spiegelebene aufeinander abbilden.

Zugelassen sind folgende Restepaarungen, wie beispielsweise:
R¹ ungleich R⁸, R² gleich R⁷, R³ gleich R⁶, R⁴ gleich R⁵,
R¹ gleich R⁸, R² gleich R⁷, R³ ungleich R⁶, R⁴ gleich R⁵.

Ober aber auch Restepaarungen bei denen mehr als nur ein Paar ungleich ist, wie beispielsweise:
R¹ ungleich R⁸, R² gleich R⁷, R³ ungleich R⁶, R⁴ gleich R⁵;
R¹ ungleich R⁸, R² ungleich R⁷, R³ ungleich R⁶, R⁴ gleich R⁵.

Ausgeschlossen wird lediglich der Fall, bei dem alle vier Restepaare jeweils paarweise für den gleichen Rest stehen:
R¹ gleich R⁸, R² gleich R⁷, R³ gleich R⁶, R⁴ gleich R⁵.
Hierbei würde es sich um ein symmetrisches Biphenol handeln.

Neben dem oben beschriebenen Verfahren zur Herstellung von Triphosphiten wird auch ein Verfahren zur Herstellung von Diphosphiten beansprucht.

Verfahren umfassend den Verfahrensschritt:
b) 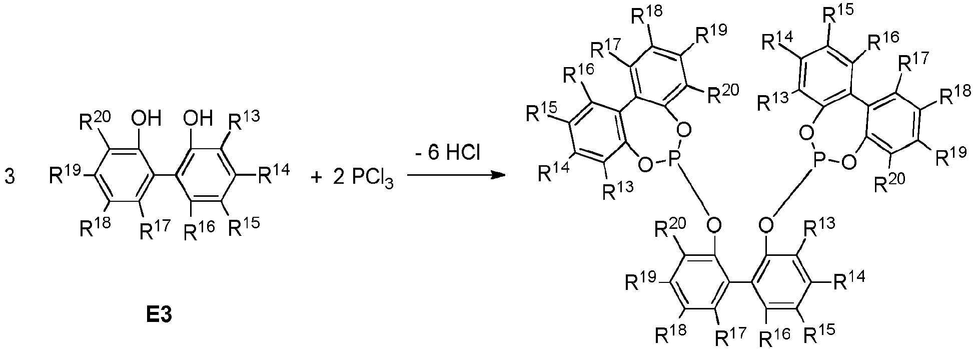 wobei die bei der Umsetzung anfallende Zwischenstufe **(Z3)** nicht isoliert wird: 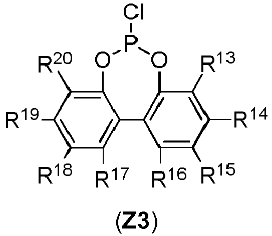 wobei
R¹³, R¹⁴, R¹⁵, R¹⁶, R¹⁷, R¹⁸, R¹⁹, R²⁰ ausgewählt sind aus:
   -H, -(C₁-C₁₂)-Alkyl, -O-(C₁-C₁₂)-Alkyl, -O-(C₆-C₂₀)-Aryl, -(C₆-C₂₀)-Aryl, -S-Alkyl, -S-Aryl, Halogen, -COO-(C₁-C₁₂)-Alkyl, -CONH-(C₁-C₁₂)-Alkyl, -CO-(C₁-C₁₂)-Alkyl, -CO-(C₆-C₂₀)-Aryl, -COOH, -OH, -SO₃H, -CN, -N[(C₁-C₁₂)-Alkyl]₂;
   wobei die genannten Alkyl- und Arylgruppen substituiert sein können.

In einer Variante des Verfahrens sind R¹³, R¹⁴, R¹⁵, R¹⁶, R¹⁷, R¹⁸, R¹⁹, R²⁰ ausgewählt aus:
-H, -(C₁-C₁₂)-Alkyl, -O-(C₁-C₁₂)-Alkyl, -O-(C₆-C₂₀)-Aryl, -S-Alkyl, -S-Aryl, Halogen.

In einer Variante des Verfahrens sind R¹³, R¹⁴, R¹⁵, R¹⁶, R¹⁷, R¹⁸, R¹⁹, R²⁰ ausgewählt aus:
-H, -(C₁-C₁₂)-Alkyl, -O-(C₁-C₁₂)-Alkyl, -O-(C₆-C₂₀)-Aryl.

In einer Variante des Verfahrens sind R¹³, R¹⁴, R¹⁵, R¹⁶, R¹⁷, R¹⁸, R¹⁹, R²⁰ ausgewählt aus:
-H, -(C₁-C₁₂)-Alkyl, -O-(C₁-C₁₂)-Alkyl.

In einer Variante des Verfahrens sind R¹³, R¹⁴, R¹⁵, R¹⁶, R¹⁷, R¹⁸, R¹⁹, R²⁰ ausgewählt aus:
-(C₁-C₁₂)-Alkyl, -O-(C₁-C₁₂)-Alkyl.

In einer Variante des Verfahrens stehen die beiden Reste mindestens eines der vier folgenden Restepaare nicht für den gleichen Rest: R¹³ und R²⁰, R¹⁴ und R¹⁹, R¹⁵ und R¹⁸, R¹⁶ und R¹⁷.

Durch das Merkmal, dass "die beiden Reste mindestens eines der vier folgenden Restepaare nicht für den gleichen Rest stehen: R¹³ und R²⁰, R¹⁴ und R¹⁹, R¹⁵ und R¹⁸, R¹⁶ und R¹⁷ " wird zum Ausdruck gebracht, dass es sich um ein unsymmetrisches Biphenol handelt. Bei unsymmetrischen Biphenolen lassen sich die beiden Aromaten nicht durch eine zwischen ihnen liegende Spiegelebene aufeinander abbilden.

Zugelassen sind folgende Restepaarungen, wie beispielsweise:
R¹³ ungleich R²⁰, R¹⁴ gleich R¹⁹, R¹⁵ gleich R¹⁸, R¹⁶ gleich R¹⁷;
R¹³ gleich R²⁰, R¹⁴ gleich R¹⁹, R¹⁵ ungleich R¹⁸, R¹⁶ gleich R¹⁷.

Ober aber auch Restepaarungen bei denen mehr als nur ein Paar ungleich ist, wie beispielsweise:
R¹³ ungleich R²⁰, R¹⁴ gleich R¹⁹, R¹⁵ ungleich R¹⁸, R¹⁶ gleich R¹⁷;
R¹³ ungleich R²⁰, R¹⁴ ungleich R¹⁹, R¹⁵ ungleich R¹⁸, R¹⁶ gleich R¹⁷.

Ausgeschlossen wird lediglich der Fall, bei dem alle vier Restepaare jeweils paarweise für den gleichen Rest stehen:
R¹³ gleich R²⁰, R¹⁴ gleich R¹⁹, R¹⁵ gleich R¹⁸, R¹⁶ gleich R¹⁷.
Hierbei würde es sich um ein symmetrisches Biphenol handeln.

In einer Variante des Verfahrens erfolgt die Umsetzung im Verfahrensschritt b) unter Zusatz einer Base.

In einer Variante des Verfahrens erfolgt die Umsetzung im Verfahrensschritt b) unter Zusatz einer Base, welche ausgewählt ist aus: Aminen und Pyridinderivaten.

Vorzugsweise ist die Base ausgewählt aus: Triethylamin, Dimethylaminobutan, Di-isopropylethylamin, Dimethylaminopyridin, N-Methylpyrrolidon, Pyridin.

Besonders bevorzugt ist die Base ausgewählt aus: Triethylamin, Dimethylaminopyridin, Pyridin.

In einer Variante des Verfahrens wird das Edukt **(E3)** vorgelegt, und das PCl₃ hinzugetropft.

In einer Variante des Verfahrens wird das Edukt **(E3)** vor dem Hinzutropfen von PCl₃ auf eine Temperatur im Bereich von -5 °C bis 5 °C heruntergekühlt.

Im Folgenden wird die Erfindung anhand von Ausführungsbeispielen näher erläutert.

### Allgemeine Arbeitsvorschriften

Alle nachfolgenden Präparationen wurden mit Standard-Schlenk-Technik unter Schutzgas durchgeführt. Die Lösungsmittel wurden vor Gebrauch über geeigneten Trocknungsmitteln getrocknet (Purification of Laboratory Chemicals, W. L. F. Armarego (Autor), Christina Chai (Autor), Butterworth Heinemann (Elsevier), 6. Auflage, Oxford 2009).
Phosphortrichlorid (Aldrich) wurde vor dem Einsatz unter Argon destilliert. Alle präparativen Arbeiten erfolgten in ausgeheizten Gefäßen. Die Charakterisierung der Produkte erfolgte mittels NMR-Spektroskopie. Chemische Verschiebungen (δ) werden in ppm angegeben. Die Referenzierung der ³¹P-NMR-Signale erfolgte gemäß: SR³¹P = SR¹H * (BF³¹P / BF¹H) = SR¹H * 0,4048. (Robin K. Harris, Edwin D. Becker, Sonia M. Cabral de Menezes, Robin Goodfellow, and Pierre Granger, Pure Appl. Chem., 2001, 73, 1795-1818; Robin K. Harris, Edwin D. Becker, Sonia M. Cabral de Menezes, Pierre Granger, Roy E. Hoffman and Kurt W. Zilm, Pure Appl. Chem., 2008, 80, 59-84).

### Synthese des Chlorophosphits

6-Chlorodibenzo[*d,f*][1,3,2]dioxaphosphepin wurde nach DE 10 2008 043 584 hergestellt.

### 11-(Dibenzo[d,f][1,3,2]dioxaphosphepin-6-yloxy)-2-((2'(dibenzo[d,f][1,3,2]dioxaphosphepin-6-yloxy)-[1,1'-biphenyl]-2-yl)oxy)anthra[1,9-de][1,3,2]dioxaphosphinin.

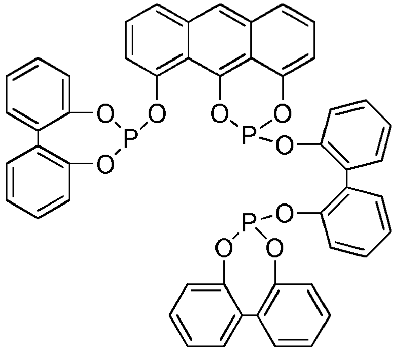

Eine Lösung von Anthracen-1,8,9-triol (0,344 g; 1,520 mmol) in Toluol (6 ml) wurde mit Triethylamin (0,483 g; 4,773 mmol) versetzt, auf 0 °C gekühlt und zu dieser Mischung unter Rühren eine Lösung von 6-Chlorodibenzo[*d,f*][1,3,2]dioxaphosphepin (1,143 g; 4,560 mmol) in Toluol (15 ml) tropfenweise zugegeben. Die Reaktionsmischung wurde über Nacht bei Raumtemperatur gerührt und dann filtriert. Das Filtrat wurde im Vakuum bis zur Trockne eingedampft, der erhaltene gelbe Feststoff bei 50°C / 0,1 mbar getrocknet und dann aus Hexan (30 ml) umkristallisiert.
Ausbeute: 1,170 g (1,347 mmol; 89 %).
Elementaranalyse (berechnet für C₅₀H₃₁O₉P₃ = 868,71 g/ mol) C 69,13 (69,13); H 3,79 (3,60); P 10,74 (10,70)%.
³¹P-NMR (CD₂Cl₂): 103,8; 104,3; 142,7; 142,8; 145,1; 145,3 (zwei Isomere im Verhältnis 6:1) ppm.
¹H-NMR (CD₂Cl₂): 6,67 (m, 1 H); 6,75 (m, 1 H); 6,80 (t, 1 H); 6,85-6,88 (m, 1 H); 6,93 (m, 1 H); 7,00 (m, 1 H); 7,08 (m, 1 H); 7,18-7,34 (m, 11 H); 7,37-7,46 (m, 8 H); 7,57-7,63 (m, 3 H); 7,74 (m, 1 H); 8,04 (s, 1 H) ppm.
¹³C-NMR für dominierendes Isomer (CD₂Cl₂): 111,2; 114,8 (d, *J*_{CP}= 14,5 Hz); 115,4; 117,3 (d, *J*_{CP}= 9,7 Hz); 119,8 (d, *J*_{CP}= 11,6 Hz); 121,0; 122,3; 122,7; 122,8; 124,3; 124,7; 125,5; 125,6; 125,8; 125,9; 127,2; 128,6; 129,1; 129,4; 129,6 (d, *J*_{CP}= 9,5 Hz); 129,8; 130,0 (d, *J*_{CP}= 5,5 Hz); 130,4 (d, *J*_{CP}= 3,6 Hz); 131,4 (d, *J*_{CP}= 3,4 Hz); 131,7 (d, *J*_{CP}= 3,1 Hz); 131,8; 132,3; 132,9; 135,2; 140,4 (d, *J*_{CP}= 5,5 Hz); 144,3 (d, *J*_{CP}= 3,5 Hz); 147,4 (d, *J*_{CP}= 8,3 Hz); 149,2 (d, *J*_{CP}= 10,1 Hz); 149,2 (d, *J*_{CP}= 10,5 Hz); 149,5 (d, *J*_{CP}= 9,1 Hz); 149,6 (d, *J*_{CP}= 5,0 Hz); 149,6 (d, *J*_{CP}= 6,5 Hz); 149,7 (d, *J*_{CP}= 8,5 Hz) ppm.
ESI-TOF/HRMS: m/e 869,12508 (M+H)⁺.

Mit dem erfindungsgemäßen Verfahren lässt sich ein Anthracentriol-basiertes Triphosphit herstellen, welches das Phenolatanion des Diphosphits **A** als Teilstruktur enthält (vgl. Reaktionsschema 1), ohne dass diese Zwischenstufe **A** isoliert werden muss.

### 6,6'-((4'-(tert-Butyl)-3-methoxy-5-methyl-[1,1'-biphenyl]-2,2'-diyl)bis(oxy))bis(9-(tert-butyl)-4-methoxy-2-methyldibenzo[d,f][1,3,2]dioxaphosphepin)

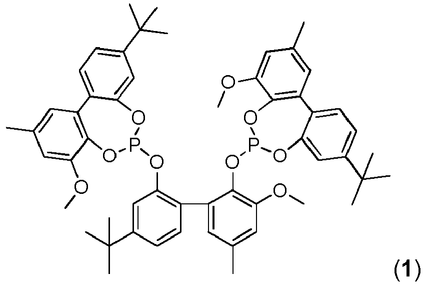

### Variante 1 (nichterfindungsgemäße, zweistufige Synthese):

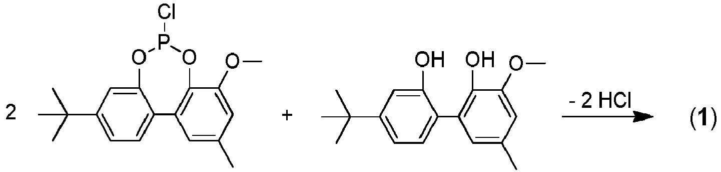

### 9-(tert-Butyl)-6-chloro-4-methoxy-2-methyldibenzo[d,f][1,3,2]dioxaphosphepin

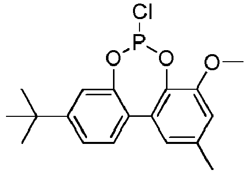

Zu einer auf 0 °C gekühlten Lösung von 4'-(tert-Butyl)-3-methoxy-5-methyl-[1,1'-biphenyl]-2,2'-diol (2,405 g; 8,398 mmol) in einer Mischung aus THF (25 ml) und Pyridin (2 ml) wird unter Rühren eine Lösung von Phosphortrichlorid (1,153 g; 8,398 mmol) in THF (10 ml) getropft. Das Reaktionsgemisch wird zunächst über Nacht bei Raumtemperatur und dann 30 h bei 70 °C gerührt. Es wird filtriert und das Filtrat im Vakuum zur Trockne eingeengt.
Ausbeute: 2,554 g (7,281 mmol; 87%).
³¹P-NMR (CD₂Cl₂): 178,1 ppm.
Das Produkt wurde wie erhalten in der folgenden Synthese eingesetzt.

### Synthese von (1)

Eine Lösung von 4'-(*tert*-Butyl)-3-methoxy-5-methyl-[1,1'-biphenyl]-2,2'-diol (0,274 g; 0,957 mmol) in THF (10 ml) wurde mit einer Lösung von zwei Äquivalenten n-Butyllithium in Hexan (3,59 ml) bei -20 °C versetzt, die erhaltene Mischung noch 20 min bei dieser Temperatur gerührt und dann eine Lösung von 9-(*tert*-Butyl)-6-chloro-4-methoxy-2-methyldibenzo[*d,f*][1,3,2]dioxaphosphepin (0,792 g; 2,258 mmol) in THF (11 ml) bei Raumtemperatur zugegeben. Die Reaktionsmischung wurde über Nacht gerührt und das Lösungsmittel im Vakuum abgezogen. Toluol (25 ml) wurde zugegeben und die resultierende Suspension filtriert. Das Filtrat wurde nochmals über Kieselgel filtriert und das Lösungsmittel im Vakuum entfernt. Der erhaltene Feststoff wurde für 3 h bei 50°C / 0,1 mbar getrocknet. Ausbeute: 0,856 g (0,936 mmol; 98 %) als Gemisch von zwei Diastereomeren.
Elementaranalyse (berechnet für C₅₄H₆₀O₉P₂ = 915,01 g/ mol) C 70,67 (70,88); H 6,52 (6,61); P 6,69 (6,77) %.
³¹P-NMR (CD₂Cl₂): 141,9 (d, *J*_{PP}= 7.8 Hz); 142,2 (d, *J*_{PP}= 7.8 Hz); 145,1 (d, *J*_{PP}= 7.8 Hz); 145,2 (d, *J*_{PP}= 7.8 Hz) ppm.
¹H-NMR (CD₂Cl₂): 1,22-1,33 (dd, 18 H); 1,37 (m, 9 H); 2,42 (m, 9 H); 3,81-3,88 (dd, 6 H); 4,02 (s, 3 H); 6,79-6,85 (m, 3 H, Hₐᵣₒₘ); 6,88 (m, 2 H, Hₐᵣₒₘ); 6,90-6,98 (m, 1 H, Hₐᵣₒₘ); 6,95 (m, 1 H, Hₐᵣₒₘ); 7,00-7,05 (m, 1 H, Hₐᵣₒₘ); 7,20-7,35 (m, 4 H, Hₐᵣₒₘ); 7,37-7,44 (m, 3 H, Hₐᵣₒₘ) ppm.
¹³C-NMR (wegen starker Überlappungen im aromatischen Bereich werden nur die Werte für aliphatische Kohlenstoffatome in CD₂Cl₂ als Lösungsmittel angegeben) 21,4; 21,6; 31,3; 31,4; 31,5; 34,9; 34,9; 35,0; 56,4; 56,5; 56,8; 56,8 ppm.
ESI-TOF/HRMS: m/e 915,37826 (M+H)⁺.

### Variante 2 (erfingunggemäße Eintopfsynthese):

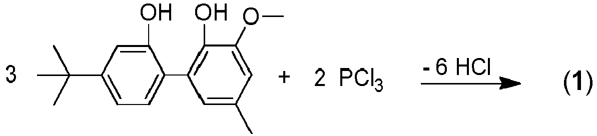

Zu einer auf 0 °C gekühlten Lösung von 4'-(tert-Butyl)-3-methoxy-5-methyl-[1,1'-biphenyl]-2,2'-diol (1,0 g; 3,492 mmol) in einer Mischung aus Toluol (25 ml) und Triethylamin (1,5 ml) wird unter Rühren eine Lösung von Phosphortrichlorid (0,320 g; 2,326 mmol) in Toluol (20 ml) getropft. Nach Zugabe von weiterem Toluol (5 ml) wird das Reaktionsgemisch über Nacht bei Raumtemperatur gerührt. Es wird filtriert und das Filtrat im Vakuum zur Trockne eingeengt. Ausbeute: 1,06 g (99%).
³¹P-NMR (CD₂Cl₂): 141,9 (d, *J*_{PP}= 7.8 Hz); 142,2 (d, *J*_{PP}= 7.8 Hz); 145,1 (d, *J*_{PP}= 7.8 Hz); 145,2 (d, *J*_{PP}= 7.8 Hz) ppm, für die Hauptkomponente, welche 65% der Signalintensität im ³¹P-NMR-Spektrum (D₁= 5 sec.) hält.

Mit dem erfindungsgemäßen Verfahren lassen sich Diphosphite in einem einzigen Reaktionsschritt mit sehr guter Ausbeute herstellen.

## Patentansprüche

1. Verfahren umfassend den Verfahrensschritt:
a) 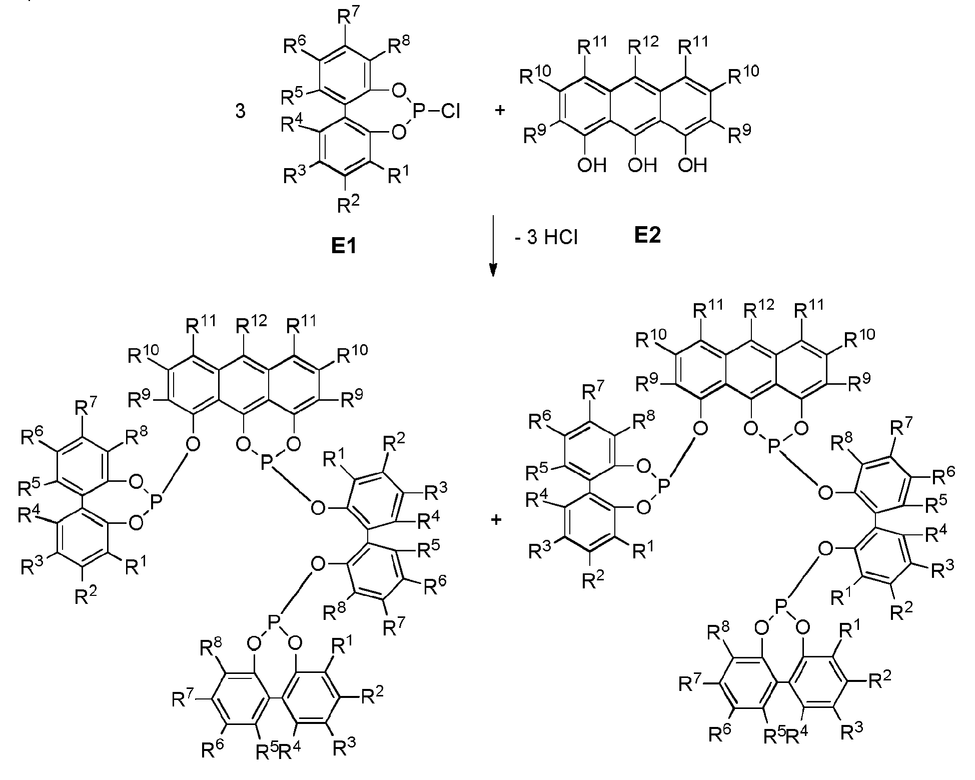 wobei die bei der Umsetzung anfallenden Zwischenstufen (Z1) und (Z2) nicht isoliert werden: 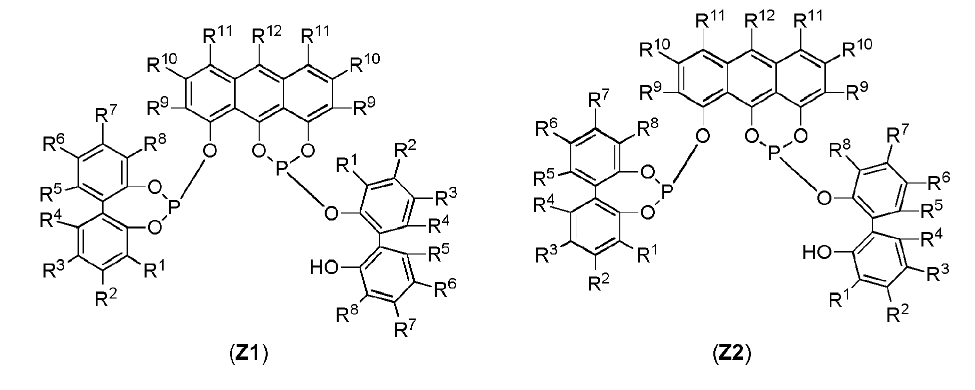 wobei
R¹, R², R³, R⁴, R⁵, R⁶, R⁷, R⁸ ausgewählt sind aus:
-H, -(C₁-C₁₂)-Alkyl, -O-(C₁-C₁₂)-Alkyl, -O-(C₆-C₂₀)-Aryl, -(C₆-C₂₀)-Aryl, -S-Alkyl, -S-Aryl, Halogen, -COO-(C₁-C₁₂)-Alkyl, -CONH-(C₁-C₁₂)-Alkyl, -CO-(C₁-C₁₂)-Alkyl, -CO-(C₆-C₂₀)-Aryl, -COOH, -OH, -SO₃H, -CN, -N[(C₁-C₁₂)-Alkyl]₂;
R⁹, R¹⁰, R¹¹, R¹² ausgewählt sind aus:
-H, -(C₁-C₁₂)-Alkyl, -O-(C₁-C₁₂)-Alkyl, -O-(C₆-C₂₀)-Aryl, -(C₆-C₂₀)-Aryl, -S-Alkyl, -S-Aryl, Halogen, -COO-(C₁-C₁₂)-Alkyl, -CONH-(C₁-C₁₂)-Alkyl, -CO-(C₁-C₁₂)-Alkyl, -CO-(C₆-C₂₀)-Aryl, -COOH, -OH, -SO₃H, -N[(C₁-C₁₂)-Alkyl]₂;
wobei die genannten Alkyl- und Arylgruppen substituiert sein können.

2. Verfahren nach Anspruch 1,
wobei R¹, R², R³, R⁴, R⁵, R⁶, R¹, R⁸ ausgewählt sind aus:
-H, -(C₁-C₁₂)-Alkyl, -O-(C₁-C₁₂)-Alkyl, -O-(C₆-C₂₀)-Aryl, -S-Alkyl, -S-Aryl, Halogen.

3. Verfahren nach einem der Ansprüche 1 oder 2,
wobei R¹, R², R³, R⁴, R⁵, R⁶, R⁷, R⁸ ausgewählt sind aus:
-H, -(C₁-C₁₂)-Alkyl, -O-(C₁-C₁₂)-Alkyl, -O-(C₆-C₂₀)-Aryl.

4. Verfahren nach einem der Ansprüche 1 bis 3,
wobei R⁹, R¹⁰, R¹¹, R¹² ausgewählt sind aus:
-H, -(C₁-C₁₂)-Alkyl, -O-(C₁-C₁₂)-Alkyl, -O-(C₆-C₂₀)-Aryl, -S-Alkyl, -S-Aryl, Halogen.

5. Verfahren nach einem der Ansprüche 1 bis 4,
wobei R⁹, R¹⁰, R¹¹, R¹² ausgewählt sind aus:
-H, -(C₁-C₁₂)-Alkyl, -O-(C₁-C₁₂)-Alkyl, -O-(C₆-C₂₀)-Aryl.

6. Verfahren nach einem der Ansprüche 1 bis 5,
wobei die Umsetzung im Verfahrensschritt a) unter Zusatz einer Base erfolgt.

7. Verfahren nach einem der Ansprüche 1 bis 6,
wobei das Edukt **(E2)** vorgelegt wird, und das Edukt **(E1)** hinzugetropft wird.

8. Verfahren nach Anspruch 7,
wobei das Edukt **(E2)** vor dem Hinzutropfen des Eduktes **(E1)** auf eine Temperatur im Bereich von -5 °C bis 5 °C heruntergekühlt wird.

9. Verfahren umfassend den Verfahrensschritt:
b) 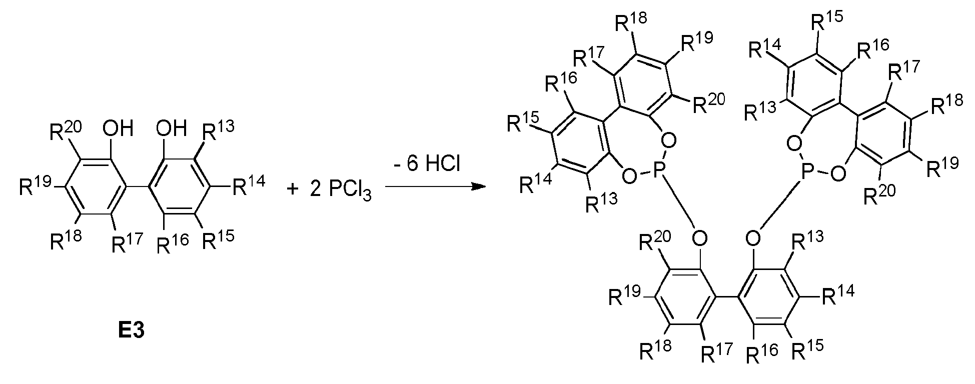 wobei die bei der Umsetzung anfallende Zwischenstufe **(Z3)** nicht isoliert wird: 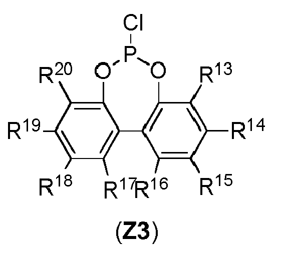 wobei
R¹³, R¹⁴, R¹⁵, R¹⁶, R¹⁷, R¹⁸, R¹⁹, R²⁰ ausgewählt sind aus:
-H, -(C₁-C₁₂)-Alkyl, -O-(C₁-C₁₂)-Alkyl, -O-(C₆-C₂₀)-Aryl, -(C₆-C₂₀)-Aryl, -S-Alkyl, -S-Aryl, Halogen, -COO-(C₁-C₁₂)-Alkyl, -CONH-(C₁-C₁₂)-Alkyl, -CO-(C₁-C₁₂)-Alkyl, -CO-(C₆-C₂₀)-Aryl, -COOH, -OH, -SO₃H, -CN, -N[(C₁-C₁₂)-Alkyl]₂;
wobei die genannten Alkyl- und Arylgruppen substituiert sein können.

10. Verfahren nach Anspruch 9,
wobei R¹³, R¹⁴, R¹⁵, R¹⁶, R¹⁷, R¹⁸, R¹⁹, R²⁰ ausgewählt sind aus:
-H, -(C₁-C₁₂)-Alkyl, -O-(C₁-C₁₂)-Alkyl, -O-(C₆-C₂₀)-Aryl, -S-Alkyl, -S-Aryl, Halogen.

11. Verfahren nach einem der Ansprüche 9 oder 10,
wobei R¹³, R¹⁴, R¹⁵, R¹⁶, R¹⁷, R¹⁸, R¹⁹, R²⁰ ausgewählt sind aus:
-H, -(C₁-C₁₂)-Alkyl, -O-(C₁-C₁₂)-Alkyl, -O-(C₆-C₂₀)-Aryl.

12. Verfahren nach einem der Ansprüche 9 bis 11,
wobei die beiden Reste mindestens eines der vier folgenden Restepaare nicht für den gleichen Rest stehen: R¹³ und R²⁰, R¹⁴ und R¹⁹, R¹⁵, und R¹⁸, R¹⁶ und R¹⁷.

13. Verfahren nach einem der Ansprüche 9 bis 12,
wobei die Umsetzung im Verfahrensschritt b) unter Zusatz einer Base erfolgt.

14. Verfahren nach einem der Ansprüche 9 bis 13,
wobei das Edukt **(E3)** vorgelegt wird, und das PCl₃ hinzugetropft wird.

15. Verfahren nach Anspruch 14,
wobei das Edukt **(E3)** vor dem Hinzutropfen von PCl₃ auf eine Temperatur im Bereich von -5 °C bis 5 °C heruntergekühlt wird.

## Geänderte Patentansprüche

### Geänderte Patentansprüche gemäss Regel 137(2) EPÜ.

1. Verfahren umfassend den Verfahrensschritt: 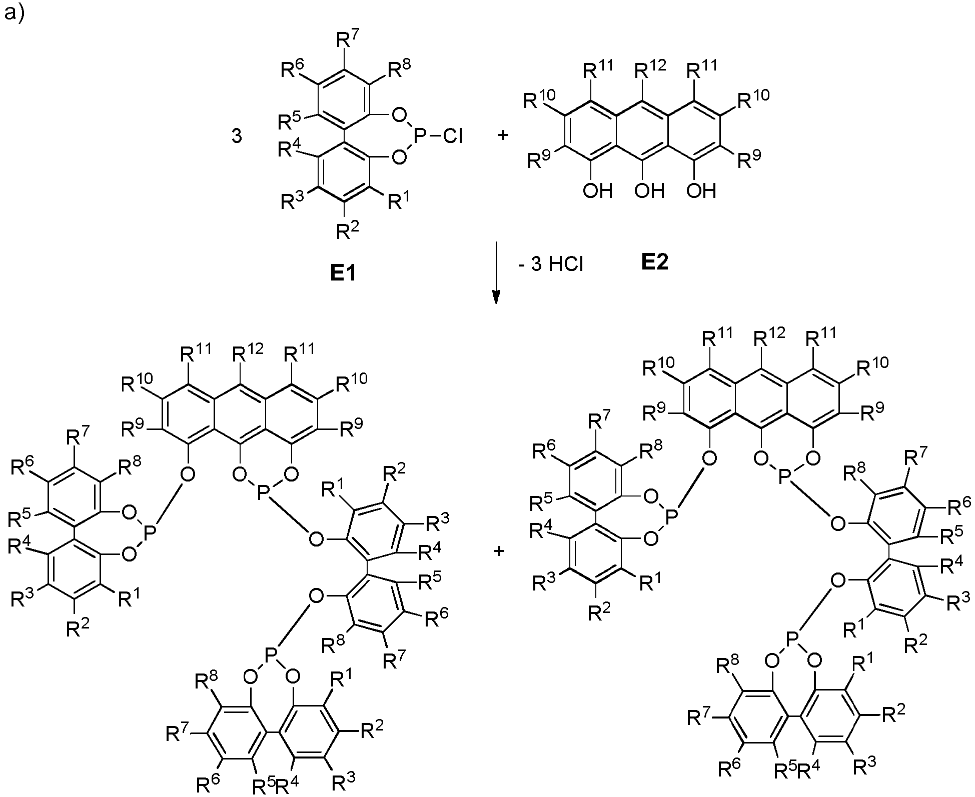 wobei die bei der Umsetzung anfallenden Zwischenstufen **(Z1)** und **(Z2)** nicht isoliert werden: 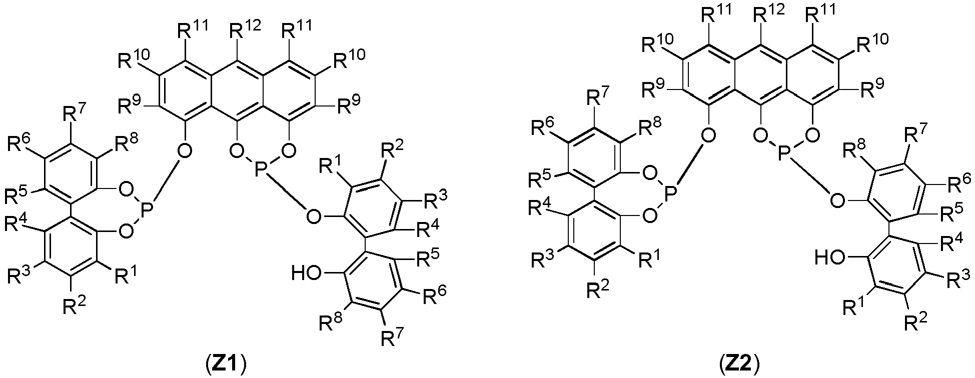 wobei
R¹, R², R³, R⁴, R⁵, R⁶, R⁷, R⁸ ausgewählt sind aus:
- H, -(C₁-C₁₂)-Alkyl, -O-(C₁-C₁₂)-Alkyl, -O-(C₆-C₂₀)-Aryl, -(C₆-C₂₀)-Aryl, -S-Alkyl, -S-Aryl, Halogen, -COO-(C₁-C₁₂)-Alkyl, -CONH-(C₁-C₁₂)-Alkyl, -CO-(C₁-C₁₂)-Alkyl, -CO-(C₆-C₂₀)-Aryl, -COOH, -OH, -S0₃H, -CN, -N[(C₁-C₁₂)-Alkyl]₂;
R⁹, R¹⁰, R¹¹, R¹² ausgewählt sind aus:
- H, -(C₁-C₁₂)-Alkyl, -O-(C₁-C₁₂)-Alkyl, -O-(C₆-C₂₀)-Aryl, -(C₆-C₂₀)-Aryl, -S-Alkyl, -S-Aryl, Halogen, -COO-(C₁-C₁₂)-Alkyl, -CONH-(C₁-C₁₂)-Alkyl, -CO-(C₁-C₁₂)-Alkyl, -CO-(C₆-C₂₀)-Aryl, -COOH, -OH, -SO₃H, -N[(C₁-C₁₂)-Alkyl]₂;
wobei die genannten Alkyl- und Arylgruppen wie folgt substituiert sein können:
substituierte -(C₁-C₁₂)-Alkylgruppen und substituierte -(C₁-C₁₂)-Alkoxygruppen können in Abhängigkeit von ihrer Kettenlänge, einen oder mehrere Substituenten aufweisen; die Substituenten sind unabhängig voneinander ausgewählt unter -(C₃-C₁₂)-Cycloalkyl, -(C₃-C₁₂)-Heterocycloalkyl, -(C₆-C₂₀)-Aryl, Fluor, Chlor, Cyano, Formyl, Acyl oder Alkoxycarbonyl; substituierte -(C₆-C₂₀)-Arylgruppen und -(C₆-C₂₀)-Aryl-(C₆-C₂₀)-Arylgruppen können, in Abhängigkeit von der Ringgröße, einen oder mehrere Substituenten aufweisen; diese Substituenten sind unabhängig voneinander ausgewählt unter -H, -(C₁-C₁₂)-Alkyl, -O-(C₁-C₁₂)-Alkyl, -O-(C₆-C₂₀)-Aryl, -(C₆-C₂₀)-Aryl, -Halogen, -COO-(C₁-C₁₂)-Alkyl, -CONH-(C₁-C₁₂)-Alkyl, -(C₆-C₂₀)-Aryl-CON[(C₁-C₁₂)-Alkyl]₂, -CO-(C₁-C₁₂)-Alkyl, -CO-(C₆-C₂₀)-Aryl, -COOH, -OH, -SO₃H;-SO₃Na, -NO₂, -CN, -N[(C₁-C₁₂)-Alkyl]₂.

2. Verfahren nach Anspruch 1,
wobei R¹, R², R³, R⁴, R⁵, R⁶, R⁷, R⁸ ausgewählt sind aus:
- H, -(C₁-C₁₂)-Alkyl, -O-(C₁-C₁₂)-Alkyl, -O-(C₆-C₂₀)-Aryl, -S-Alkyl, -S-Aryl, Halogen.

3. Verfahren nach einem der Ansprüche 1 oder 2,
wobei R¹, R², R³, R⁴, R⁵, R⁶, R⁷, R⁸ ausgewählt sind aus:
- H, -(C₁-C₁₂)-Alkyl, -O-(C₁-C₁₂)-Alkyl, -O-(C₆-C₂₀)-Aryl.

4. Verfahren nach einem der Ansprüche 1 bis 3,
wobei R⁹, R¹⁰, R¹¹, R¹² ausgewählt sind aus:
- H, -(C₁-C₁₂)-Alkyl, -O-(C₁-C₁₂)-Alkyl, -O-(C₆-C₂₀)-Aryl, -S-Alkyl, -S-Aryl, Halogen.

5. Verfahren nach einem der Ansprüche 1 bis 4,
wobei R⁹, R¹⁰, R¹¹, R¹² ausgewählt sind aus:
- H, -(C₁-C₁₂)-Alkyl, -O-(C₁-C₁₂)-Alkyl, -O-(C₆-C₂₀)-Aryl.

6. Verfahren nach einem der Ansprüche 1 bis 5,
wobei die Umsetzung im Verfahrensschritt a) unter Zusatz einer Base erfolgt.

7. Verfahren nach einem der Ansprüche 1 bis 6,
wobei das Edukt **(E2)** vorgelegt wird, und das Edukt (**E1**) hinzugetropft wird.

8. Verfahren nach Anspruch 7,
wobei das Edukt **(E2)** vor dem Hinzutropfen des Eduktes (**E1**) auf eine Temperatur im Bereich von -5 °C bis 5 °C heruntergekühlt wird.
